(19) Europäisches Patentamt
European Patent Office
Office européen des brevets

(11) Veröffentlichungsnummer: **0 135 016**
**B1**

(12) **EUROPÄISCHE PATENTSCHRIFT**

(45) Veröffentlichungstag der Patentschrift: **08.04.87**

(51) Int. Cl.⁴: **C 08 G 65/46**

(21) Anmeldenummer: **84108307.4**

(22) Anmeldetag: **14.07.84**

(54) **Verfahren zur Stabilisierung von Polyphenylenetherlösungen.**

(30) Priorität: **22.07.83 DE 3326394**

(43) Veröffentlichungstag der Anmeldung: **27.03.85 Patentblatt 85/13**

(45) Bekanntmachung des Hinweises auf die Patenterteilung: **08.04.87 Patentblatt 87/15**

(84) Benannte Vertragsstaaten: **AT BE DE FR GB NL**

(56) Entgegenhaltungen:
**EP-A-0 103 276**
**DE-A-2 754 887**
**DE-B-2 430 130**

(73) Patentinhaber: **BASF Aktiengesellschaft, Carl-Bosch- Strasse 38, D-6700 Ludwigshafen (DE)**

(72) Erfinder: **Reffert, Rudi Wilhelm, Berliner Strasse 18, D-6711 Beindersheim (DE)**
Erfinder: **Hambrecht, Juergen, Dr., Werderstrasse 30, D-6900 Heidelberg (DE)**
Erfinder: **Echte, Adolf, Dr., Leuschnerstrasse 42, D-6700 Ludwigshafen (DE)**
Erfinder: **Swoboda, Johann, Dr., Neuwiesenstrasse 28, D-6700 Ludwigshafen (DE)**

**EP 0 135 016 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Verfahren zur Herstellung von gegen Molekular gewichtsabbau stabilen hochmolekularen Polyphenylenethern aus einwertigen Phenolen, die in den beiden ortho-Stellungen und gegebenenfalls in meta-Position Alkylsubstituenten aufweisen, durch oxidative Kupplungsreaktion mit Sauerstoff bei Temperaturen zwischen 15 und 50°C in Anwesenheit eines Katalysatorkomplexes aus einem Rupfersalz und einem organischen Amin in Gegenwart eines Lösungsmittels und anschließendes Abstoppen der Reaktion und Entfernen der Metallkomponente des Katalysators aus der organischen Lösung durch Zugabe wäßriger Lösungen komplex- oder chelatkomplexbildender Mittel und gegebenenfalls reduzierender Substanzen, sowie Hilfs- und Beschleunigungsmittel für die phasenübergreifenden Reaktionen und für die Phasentrennung, sowie durch Zugabe von Stabilisatoren während oder nach der Metallkatalysator-Abtrennung.

Polyphenylenether und Verfahren zu ihrer Herstellung sind allgemein bekannt und vielfach beschrieben, beispielsweise in den US-Patentschriften 3 306 874, 3 306 875, 3 639 656, 3 642 699 und 3 661 848.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z.B. in der DE-OS 21 05 372 im Gegenstromextraktionsverfahren vorgenommen wird. Verwendet werden auch Polyaninocarbonsäuren (s. DE-OS 23 64 319) oder andere Chelatisierungsmittel wie Nitrilotriessigsäure und ihre Natriumsalze oder Ethylendiamintetraessigsäure und ihre Natriumsalze (s. DE-OS 25 32 477), letztere auch in Kombination mit quartären Ammoniumsalzen (s. US-PS 4 026 870). Beschrieben wird auch die Katalysatorabtrennung mit Hilfe komplexbildender Mittel aus der Gruppe des Bisguanids (s. DE-OS 24 60 325). Neben dem Abbrechen der oxidativen Selbstkondensation hat die Zugabe des komplexbildenden Agens auch die möglichst vollständige Entfernung des Katalysators aus dem Polyphenylenether zun Ziel, da Verunreinigungen des Polymeren durch Metallreste zu einer Verschlechterung des gesamten Eigenschaftsbildes des Polymeren führen. In der Regel muß neben der Entfernung des Katalysatorsystems eine zusätzliche Maßnahme ergriffen werden, um die Polyphenylenetherlösungen gegen einen Molekulargewichtsabbau zu stabilisieren. In der DE-OS 26 16 746 ist deshalb vorgeschlagen worden die Polymerlösungen mit Reduktionsmittel. wie z.B. Natriumdithionit oder Bydrazin zu behandeln. In den meisten Fällen reicht diese Maßnahme jedoch nicht aus um eine Stabilisierung über längere Zeiträume zu erzielen. In den DE-OS 24 30 130 und 27 54 887 wird deshalb die Zugabe von zweiwertigen Phenolen zusätzlich zu den üblichen Reduktionsmitteln beschrieben. Beispielsweise werden dort Kombinationen aus Natriumdithionit oder Natriumsulfit und Hydrochinon beschrieben.

Es hat sich jedoch gezeigt, daß auch diese Maßnahme nicht ausreicht um Polyphenylenoxidlösungen in einem Schnitt über längere Zeit bei Temperaturen bis 280°C gegen einen Molekulargewichtsabbau zu schützen. Darüber hinaus ergaben sich Nachteile bezüglich der Eigenfarbe der Polyphenylenoxidlösungen und insbesondere bei der Abtrennung der wäßrigen Lösungen der Reduktionsmittel. Diese werden in der Regel zusammen mit den wäßrigen Lösungen der Katalysatorabtrennmittel von der organischen Lösung des Polyphenylenethers abgetrennt. Verwendet man nun die oben genannte Kombination aus Reduktionsmittel und zweiwertigem Phenol so ergeben sich Probleme bei der Phasentrennung von organischer und wäßriger Phase und eine Folge davon ist, daß die Katalysatorabtrennung mangelhaft wird. Ein weiterer Nachteil ist die gute Wasserlöslichkeit der vorgeschlagenen zweiwertigen Phenole, da die Reaktionen, die zur Stabilisierung der Polyphenylenether führen, in der organischen Phase ablaufen. Die wasserlöslichen zweiwertigen Phenole bilden ein Verteilungsgleichgewicht zwischen den Phasen aus, und stehen deshalb in der organischen Phase nur teilweise für die Reaktionen zur Verfügung. Ein weiterer Nachteil ist die Toxizität der wasserlöslichen zweiwertigen Phenole im Abwasser, insbesondere ihre Toxizität gegenüber Bakterien und anderen Mikroorganismen (vgl. DE-OS 27 54 887).

Der Erfindung lag deshalb die Aufgabe zugrunde, ein einfaches und hochwirksames Verfahren zur Abtrennung der Katalysatorreste bei der Selbstkondensation einwertiger Phenole in Gegenwart von Sauerstoff unter gleichzeitiger Stabilisierung der resultierenden Polyphenylenetherlösung gegen Molekulargewichtsabbau zu entwickeln. Die Stabilisierung sollte dabei auch bei Temperaturen bis zu 280°C über längere Zeit, d.h. mehrere Stunden, wirksam sein.

Darüber hinaus bestand die Aufgabe, ein Verfahren zu entwickeln, das Polyphenylenether mit geringer Eigenfarbe liefert und unter Zusatz praktisch wasserunlöslicher Stabilisatoren arbeitet und somit umweltfreundlich ist und keine Entsorgungsprobleme aufwirft.

Diese Aufgabe wird erfindungsgemäß dadurch gelöst, daß die Polymerlosung gegebenfalls in Gegenwart reduzierender Substanzen, mit Verbindungen der allgemeinen Strukturen A oder B behandelt wird. Als Verbindungem der Struktur A und B werden

A: 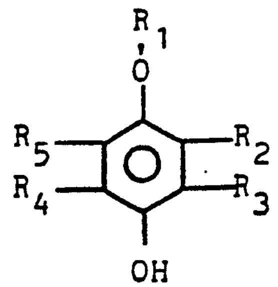  B: 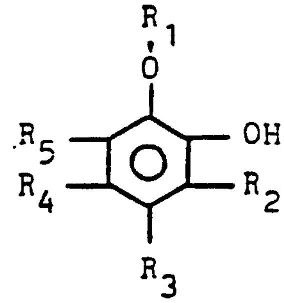

worin $R^1$ = $C_1$-$C_8$-Alkyl; Phenyl; Alkylphenyl
und $R_2$ bis $R_5$ = H; $C_1$-$C_8$-Alkyl; Halogen; COOH, $COOR_6$ ($R_6$ = $C_1$-$C_4$-Alkyl; Phenyl); $CONH_2$; $SO_3H$; $SO_2NH_2$ bedenten, eingesetzt. Bevorzugt werden die Verbindungen A oder B in Mengen von 0,1 bis 100 mMol bezogen auf 1 Mol eingesetztes monomeres Phenol, verwendet. Bevorzugt ist weiter ein Verfahren in dem die Verbindungen in Form von organischen Lösungen eingesetzt werden. Besonders bevorzugt als Verbindungen A sind Hydrochinon-Monomethylether und -Monophenylether.

Besonders bevorzugt als Verbindungen B sind Brenzcatechin-Monomethylether und -Phenylether.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemäßen Polymeren weisen im allgemeinen Molekulargewichte von 10 000 bis 90 000, bevorzugt 20 000 bis 80 000, bestimmt nach der in "Macromole kular Synthesis" 1 (1978), Seite 83, angegebenen Methode, auf. Hochmolekulare Polyphenylenether, auch Polyphenylenoxide genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind die üblichen Phenole. wie 2,6-Dimethylphenol, 2,6-Diethylphenol, 2-Methyl-6-ethylphenol, 2-Methyl-6-propylphenol, 2,6-Di-butylphenol, 2,3,6-Trimethylphenol sowie Gemische dieser Phenole.

Zur Ausführung der Polykondensation wird Sauerstoff in die 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach einem bevorzugten Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich um eine Kombination aus einem organischen Amin, z.B. n-Dibutylamin, Diethylanin, Picolin, Chinolin, Pyridinbasen, Triisopropylanin, Dimethylisopropanolamin, Triethanolamin, Triisopropanolamin oder Diisopropanolamin mit einen Kupfersalz wie Kupfer-I-bromid, Kupfer-I-chlorid, Kupfer-I-iodid, Kupfer-II-acetat, Kupfer-II-chlorid, Kupfer-II-propionat, Kupfer-II-acetessigester oder Kupfer-II-acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung inmerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt im bereich von 1:1 bis 20:1, d.h. maximal bis zu einem Überschuß des 20 fachen am Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Bei einem bevorzugten Verfahren wird die Polykondensationsreaktion bei Temperaturen zwischen 15 und 50, vorzugsweise 18 und 22°C durchgeführt. Hierzu wird der Sauerstoff in die 15 bis 50°C warme Lösung des Monomeren in Gegenwart des Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Mengen anderer Materialien. Diese Reaktionslösungen werden mit komplex- oder chelatkomplexbildenden Mitteln zur Abtrennung des im Polymeren enthaltenen Metallkatalysators behandelt. Die Art und Weise der Zugabe der metallbindenden Extraktionsmittel ist dabei unkritisch. So können diese Extraktionsmittel in Substanz ebenso wie in wäßriger Lösung und in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Separierung der Metallkomponente kann ddabei in geeigneten Verfahrensvorrichtungen, z.B. in

Dekantationstanks, Zentrifugen vorgenommen werden.

Die Kontaktzeit der komplex- oder chelatkomplexbildenden Agentien mit der katalysatorhaltigen Polyphenylenether-Phase kann innerhalb weiter Grenzen variieren. Bevorzugt werden Reaktionszeiten von 1 Minute bis 5 Stunden. Häufig genügen Reaktionszeiten von 5 bis 60 Minuten. Die bevorzugte Reaktionstemperatur liegt zwischen 25 und 90°C, es sind jedoch auch Temperaturbereiche darunter und darüber anwendbar.

Bevorzugt eingesetzt werden als komplex- oder chelatkomplexbildende Mittel solche Verbindungen, die aus der Gruppe der Polyalkylenpolyamine, Polycarbonsäuren, polymere Polycarbonsäuren, Aminopolycarbonsäuren, Aminocarbonsäuren, Aminophosphonsäuren ausgewählt sind. Besonders bevorzugt sind Aminopolycarbonsäuren und ihre Alkali- und/oder Erdalkalisalze, wie Ethylendiamintetraessigsäure, Nitrilotriessigsäure und ihre Mono-, Di;und Trinatriumsalze, Zitronensäure, Glycin, Diglykolsäure, Polyacrylsäure, Polyethylenmaleinsäure, Aminotrimethylenphosphonsäure, Hydroxyethandiphosphonsäure, Hydroxyethyliminodiessigsäure.

Die komplex- oder chelatkomplexbildenden Mittel werden in solchen Mengen eingesetzt, daß mindestens 1 Mol auf 1 Mol des zu entfernenden Metallsalzes entfällt.

Die Abtrennung der Metallkatalysatoren bis zur vollständigen Entfernung aus dem Polyphenylenether-Polymeren kann durch mehrfache Zugabe der Extraktionsmittel und anschließende Separierung der resultierenden Metallkomplexe und Metallsalze gemäß der bereits beschriebenen Verfahren erfolgen. Bevorzugt wird jedoch ein Verfahren, wonach die gesamte Katalysatormenge in einem Schritt aus dem Polymeren entfernt wird.

Während oder nach der Entfernung der metallischen Komponente des Katalysatorkomplexes mit den oben beschriebenen Extraktionsmitteln wird die organische Polyphenylenetherlösung, gegebenenfalls in Gegenwart von reduzierenden Substanzen, nach dem erfindungsgemäßen Verfahren stabilisiert. Als Reduktionsmittel eignen sich solche, die unter den gegebenen Bedingungen das Katalysatormetallion nicht zum Metall zu reduzieren vermögen. Beispiele sind Schwefeldioxid, schweflige Säure, Natrium-Sulfit oder -Dithionit, Zinn-(II)-chlorid, Eisen-(II)-sulfat, Hydroxylamin, Dialkylphosphit oder Glukose.

Die Stabilisierung nach den erfindungsgemäßen Verfahren geschieht durch Zugabe von Verbindungen der oben beschriebenen allgemeinen Strukturen A oder B. Beispiele für die Verbindungen A sind Hydrochinon-Monomethylether oder -Monophenylether, Methylhydrochinon-Monomethylether, Butylhydrochinon-Monomethylether, Dibutylhydrochinon-Monomethylether. Beispiele für die Verbindungen B sind die entsprechenden Ether und Alkylsubstitutionsprodukte des Brenzcatechins. Bevorzugt werden Hydrochinon-Monomethylether und -Monophenylether sowie Brenzcatechin-Monomethylether und -Phenylether eingesetzt.

Die Stabilisierungsmittel werden in solchen Mengen eingesetzt, daß die organischen Polyphenylenoxidlösung auch bei Temperaturen bis zu 280°C über mehrere Stunden stabil bleibt, d.h. kein Molekulargewichtsabbau und sonstige strukturellen Veränderungen erleidet. In der Regel werden hierfür 0,1 bis 100 mMol, bezogen auf das bei der oxidativen Kupplung eingesetzte Phenol, benötigt, besonders bevorzugt werden 1 bis 10 mMol, bezogen auf 1 Mol monomeres Phenol, verwendet. Es können auch Gemische der Verbindungen A und B eingesetzt werden.

Die Zugabe der Stabilisierungsmittel ist unkritisch, sofern sie nur gleichzeitig mit oder nach der Zugabe der komplex- oder chelatkomplexbildenden Mittel für die Abtrennung der Metallkomponente des Katalysatorkomplexes und gegebenenfalls der Reduktionsmittel erfolgt. Sie kann direkt mit oder nach der Zugabe der komplex- oder chelatkomplexbildenden Extraktionsmittel erfolgen, so daß kein zusätzlicher Verfahrensschritt zu der anschließenden Abtrennung der wäßrigen Phase erforderlich ist. Die Zugabe der Stabilsierungsmittel kann aber auch in einem gesonderten Verfahrensschritt erfolgen. In der Regel wird das Stabilisierungsmittel in Form von organischen Lösungen, der organischen Polyphenylenetherlösung zugesetzt. Das Stabilisierungsmittel kann aber auch in reiner Form oder in suspendierter Form zugesetzt werden.

Die Kontaktzeit des Stabilisierungsmittels mit der weitgehend katalysatorfreien organischen Polyphenylenetherlösung kann innerhalb weiter Grenzen variieren. Bevorzugt werden Reaktionszeiten von 1 Minute bis 2 Stunden. Häufig reichen jedoch Reaktionszeiten von 3 bis 60 Minuten aus. Die Umsetzung erfolgt in der Regel im Temperaturbereich von 20 bis 120°C, besonders bevorzugt wird jedoch bei Temperaturen von 50 bis 80°C gearbeitet. Es sind jedoch auch Temperaturbereiche darunter und darüber anwendbar.

Nach der Entfernung der metallischen Komponente als Komplex und/oder Salz und der Stabilisierung der Polyphenylenetherlösung kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuß von einem Alkohol, d.h. Methanol, isoliert werden. Das filtrierte Produkt kann in Alkohol aufgeschlämmt und - falls gewünscht - mit einem Entfärbungsmittel gerührt werden. Dann wird der Polyphenylenether abfiltriert und nach herkömmlichen Verfahren in Filme, Fasern, ausgeformte Gegenstände dgl. umgewandelt. Andere Alkohole wie Isopropanol, Propanol oder Ethanol sind in gleicher Weise verwendbar.

Wie bereits erwähnt, ist ein bevorzugter Aspekt des vorliegenden Verfahrens die Herstellung von thermostabilen Polyphenylenetherlösungen mit niedrigem Metallgehalt, aus denen die polymeren Stoffe nach sog. Totalisolationsverfahren, z.B. durch Sprühtrockmung, Dampfausfällung und Heißwasserzerkrümelung, gewonnen werden können. Dies erleichtert die wirtschaftliche Anwendung solcher Verfahren, die hinsichtlich der erforderlichen Energie sind der Lösungsmittelverluste wirtschaftlicher sind als die bekannten

Ausfällungsverfahren. Grundbedingung für diese kostengünstigen, weil energiesparenden Aufarbeitungsverfahren ist es jedoch, daß die organischen Polyphenylenetherlösungen bis zu Temperaturen von 280° C auch über mehrere Stunden stabil sind.

Die mit der Erfindung erzielten Vorteile bestehen insbesondere darin, daß es mit Hilfe der erfindungsgemäßen Stabilisierungsmittel gelingt, bis zu 280°C thermostabile Polyphenylenetherlösungen zu erzeugen. Gegenüber dem Stand der Technik, insbesondere gegenüber den DE-OSen 24 30 130 und 27 54 887 ist als weiterer Vorteil festzuhalten, daß die erfindungsgemäßen Stabilisiermittel praktisch wasserunlöslich sind und deshalb vollständig in der organischen Phase wirksam sind. Die Entsorgung der wäßrigen Abfälle ist deshalb erheblich problemloser.

Darüber hinaus führen die erfindungsgemäßen Stabilisierungsmittel zu sehr hell gefärbten Polyphenylenetherlösungen und -formmassen. Schließlich ist ein weiterer wesentlicher verfahrenstechnischer Vorteil bei der Verwendung der erfindungsgemäßen Stabilisierungsmittel insbesondere gegenüber dem Stand der Technik der DE-OS 27 54 887 festzustellen: während bei der Anwendung der Kombination aus Reduktionsmittel und zweiwertigem Phenol Probleme bei der Phasentrennung von organischer polyphenylenetherhaltiger und wäßriger metallextraktionsmittel- und stabilisierungsmittelhaltiger Phase auftreten, sind diese bei den erfindungsgemäßen Stabilisierungsmitteln wesentlich geringer ausgeprägt - die Phasentrennung erfolgt innerhalb weniger Minuten bei scharfer Phasentrennschicht.

**Beispiel 1**

Herstellung des Poly-(2,6-dimethyl-1,4-phenylen)-ethers

Eine Lösung von 1,2 g Cu-II-chlorid, 1,9 g Natriumbromid und 0,3 g Methyltrioctylammoniumchlorid in 15 ml Methanol werden zu 1100 ml Ethylbenzol hinzugegeben und bei 40°C gerührt. Anschließend gibt man 14 g Di-n-butylamin und eine Lösung von 275 g 2,6-Dimethylphenol in 400 ml Ethylbenzol hinzu und begast die Reaktionslösung mit 0,1 $m^3$ Sauerstoff pro Stunde während 90 Minuten. Danach wird die Sauerstoffzufuhr abgedreht und das Reaktionsgefäß mit Stickstoff gespült.

Reinigung und Stabilisierung der Reaktionslösung

Nach Beendigung der Reaktion wird die Polymerlösung mit 50 ml einer 10 %igen wäßrigen Lösung eines Copolymerisats, bestehend aus 72 Teilen Acrylsäure und 28 Teilen Maleinsäureanhydrid, einem K-Wert von 30, gemessen in 1 %igem Lösungen in Dimethylformamid, entsprechend DIN 53 726, versetzt und während 10 Minuten heftig bei 60°C gerührt, und anschließend 10 g einer 10%igen Lösung von Hydrochinonmonomethylether in Toluol und 2 g Natriumsulfit hinzugegeben und nochmals 10' bei 75°C heftig gerührt.

**Beispiel 2**

Herstellung von Poly-(2,6-dimethyl-1,4-phenylen)-ether

Eine Vorlage von 1,3 g Cu-I-Bromid und 20 g 1,4-Dimethylpentylamin und 2 g 2,6-Dimethylphenol (= DMP) wird bei 20°C 5 Minuten unter Einleiten von Sauerstoff gerührt, und dann wird im Verlauf von 30 Minuten eine Lösung von 204 g DMP in 1400 ml Toluol eindosiert. Anschließend wird noch 1 Stunde bei 20°C geruhrt. Die Reaktion wird in Gegenwart von 30 Liter Sauerstoff pro Stunde durchgeführt.

Reinigung und Stabilisierung der Reaktionslösung

Nach Beendigung der Reaktion wird die Polymerlösung mit 90 ml einer 5 %igen wäßrigen Lösung einer Polyacrylsäure, K-Wert 20, gemessen 1 %ig in Dimethylformamid, bei 60°C während 10' heftig gerührt und anschließend 26 g einer 5 %igen Lösung von Bremzcatechin-Monophenylether in Toluol und 2 g Natriumsulfit zugesetzt und nochmals 10' bei 75°C heftig gerührt.

**Vergleichsbeispiel A**

Die Herstellung des Polyphenylenethers erfolgte wie in Beispiel 1 beschrieben. Zur Katalysatorabtrennung und Stabilisierung der Polyphenylenetherlösung wurde wie in Beispiel 1 der DE-OS 27 54 887 verfahren. Die toluolische Polyphenylenetherlösung wurde hierzu mit 1,5 g einer 28 %igen wäßrigen Lösung des Trinatriumsalzes der Ethylendiamintetraessigsäure 10 Minuten lang bei 40°C heftig verrührt und anschließend mit 0,66 g Hydrochinon und 2 g Natriumsulfit versetzt und 10 Minutem heftig gerührt.

**Prüfungen**

Nach der Beendigung der Stabilisierung ließman die Gemische der Beispiele 30 min absetzen und die organischen Polyphenylenether-Lösungen würden von den wäßrigen Phasen getrennt. Die Cu-Gehalte der org. Lösungen wurden bestimmt; sie sind in der Tabelle enthalten. Von dem stabilisierten org. Lösungen wurden die Farbzahlen in Anlehnung an eine Jod-Jodkalium-Farbskala (DIN 53 403) ermittelt. Die Lösungem wurden jeweils 4 Stunden bei 70° C und nochmals 1 Stunde bei 250° C getempert und die Farbzahlen bestimmt. Von den Ausgangslösungen und nach den Temperungen wurden die Polyphenylenether aus Probem mit Methanol ausgefällt, getrocknet und die reduzierten Viskositäten an 0,5 %igen Lösungen in Chloroform bei 30° C bestimmt.

Ein Vergleich der Werte der Beispiele und des nicht-erfindumgsgemäßen Vergleichsbeispiels zeigt die Vorteile der erfimdungsgemäßen Stabilisierung.

**Tabelle**

| Beispiel | Stabilisiermittel | nach 30 min Absetzzeit Cu [mg/kg] | Ausgangslösung η [dl/g] | F.Z. | n. 4 Std. 70°C η [dl/g] | F.Z. | n. 4 Std. 70°C + 1 Std. 250°C η [dl/g] | F.Z. |
|---|---|---|---|---|---|---|---|---|
| 1 | Natriumsulfit + Hydrochinonmonomethylether | 0,1 | 0,60 | 100 | 0,62 | 7-10 | 0,63 | 20 |
| 2 | Natriumsulft + Brenzkatechinmonophenylether | 0,4 | 0,80 | 100 | 0,82 | 7-10 | 0,83 | 20 |
| A* | Natriumsulfit + Hydrochinon | 1,2 | 0,60 | 100 | 0,58 | 20 | 0,52 | 30 |

* Vergleichsbeispiel (nicht erfindungsgemäß)

**Patentansprüche**

1. Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50° C in Anwesenheit eines Katalysatorkomplexes aus einem Kupfersalz und einem organischen Amin in Gegenwart eines Lösungsmitels im Bereich von 1:1 bis 20:1 Gewichtsteilen, bezogen auf das monomere Phenol, und gegebenenfalls eines Aktivators und anschließendes Abstoppen der Reaktion und Entfernen der Metallkomponente des Katalysators aus der organischen Lösung durch Zugabe wäßriger Lösungen komplex- oder chelatkomplexbildender Mittel und gegebenenfalls reduzierender Substanzen, sowie Hilfs- und Beschleunigungsmittel für die phasenübergreifenden Reaktionen und für die Phasentrennung sowie durch Zugabe von Stabilisatoren während oder nach der Metallkatalysator-Abtrennung, dadurch gekennzeichnet, daß die organische Polyphenylenetherlösung mit Stabilisatoren der allgemeinen Strukturen A oder B

A: 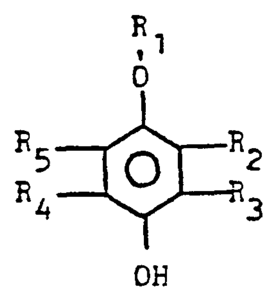

B: 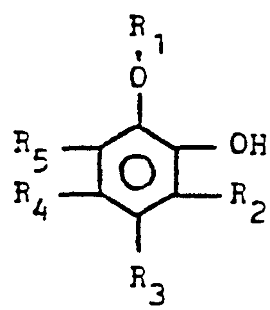

worin $R_1$ = $C_1$-$C_8$-Alkyl; Phenyl; Alkylphenyl und $R_2$ bis $R_5$ = H; $C_1$-$C_8$-Alkyl; Halogen, COOH; COOR ($R_6$ = $C_1$-$C_4$-Alkyl; Phenyl); $CONH_2$; $SO_3H$; $SO_2NH_2$ bedeuten, versetzt werden.

2. Verfahren gemäß Anspruch 1, dadurch gekennzeichnet, daß die Verbindungen der allgemeinen Strukturen A oder B in Mengen von 0,1 bis 100 mMol, bezogen auf 1 Mol eingesetztes monomeres Phenol, verwendet werden.

3. Verfahren gemäß den Ansprüchen 1 bis 2, dadurch gekennzeichnet, daß die Verbindungen der allgemeinen Strukturen A oder B in Form von organischen Lösungen eingesetzt werden.

4. Verfahren gemäß den Ansprüchen 1 bis 3, dadurch gekennzeichnet, daß als Verbindung A Hydrochinonmonomethylether oder Hydrochinonmonophenylether eimgesetzt wird.

5. Verfahren gemäß den Ansprüchen 1 bis 3, dadurch gekemnzeichnet, daß als Verbindung B Brenzcatechin-Monomethylether oder -Monophenylether eingesetzt wird.

## Claims

1. A process for the preparation of a high molecular weight polyphenylene ether from a monohydric phenol, which is alkyl-substituted at the two ortho-positions but not at the para-position and may or may not be alkyl-substituted at the meta-position, by an oxidative coupling reaction with oxygen at from 15 to 50°C in the presence of a catalyst complex obtained from a copper salt and an organic amine, and in the presence of from 1 to 20 parts by weight of a solvent per part by weight of the monomeric phenol, and in the presence or absence of an activator, and subsequent termination of the reaction and removal of the metal component of the catalyst from the organic solution by adding an aqueous solution of a complex-forming or chelate -forming agent and, if desired, a reducing substance, as well as auxiliaries and accelerating agents for the reaction which spreads from one phase to the other, and for phase separation, as well as by adding a stabilizer during or after separation of the metal catalyst, wherein a stabilizer of the general structure A or B

A: 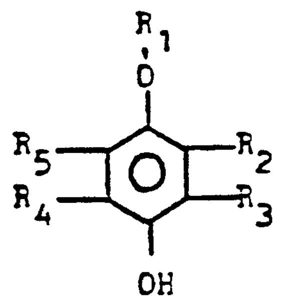

B: 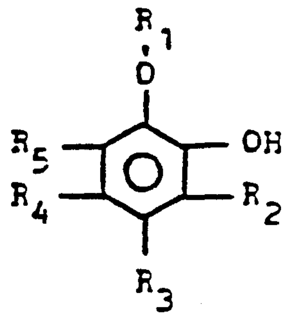

where $R_1$ is $C_1$-$C_8$-alkyl, phenyl or alkylphenyl, and $R_2$ to $R_5$ are each H, $C_1$-$C_8$-alkyl, halogen, COOH, $COOR_6$ ($R_6$ = $C_1$-$C_4$-alkyl or phenyl), $CONH_2$, $SO_3H$ or $SO_2NH_2$, is added to the organic polyphenylene ether solution.

2. A process as claimed in claim 1, wherein the compound of the general structure A or B is used in an amount of from 0.1 to 100 millimoles per mole of monomeric phenol used.

3. A process as claimed in claims 1 and 2, wherein the compound of the general structure A or B is used in the form of an organic solution.

4. A process as claimed in claims 1 to 3, wherein hydroquinone monomethyl ether or hydroquinone monophenyl ether is used as compound A.

5. A process as claimed in claims 1 to 3, wherein pyrocatechol monomethyl ether or pyrocatechol monophenyl ether is used as compound B.

## Revendications

1. Procédé de fabrication de poly(éthers de phénylène) au départ de phénols monofonctionnels qui ont des substituants alkyle dans les deux positions ortho et éventuellement en position méta, mais non en position para, par réaction de couplage oxydant sur l'oxygène, à des températures variant de 15 à 50°C, en présence d'un complexe catalytique constitué d'un sel de cuivre et d'une amine organique, en présence d'un solvant, dans la plage de 1:1 à 20:1 parties en poids, par rapport au phénol monomère, et éventuellement d'un activateur, réaction d'arrêt subséquente et élimination de la composante métallique du catalyseur de la solution organique par addition de solutions aqueuses d'agents complexants ou d'agents complexants chélateurs et éventuellement de substances réductrices, comme aussi d'adjuvants et d'accélérateurs pour les réactions affectant les phases et pour la séparation des phases, comme aussi par l'addition d'agents de stabilisation au cours ou après la séparation du catalyseur métallique, caractérisé en ce que l'on ajoute des agents de stabilisation des structures générales A ou B

A:

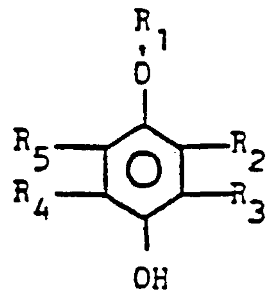

B:

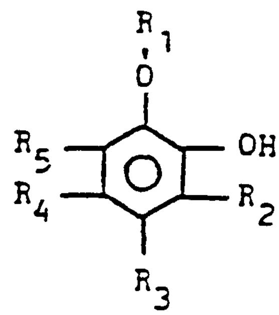

dans lesquelles $R_1$ représente un radical alkyle en $C_1$-$C_8$, phényle, alkylphényle et les symboles $R_2$ à $R_5$ représentent des atomes d'hydrogène, des radicaux alkyle en $C_1$-$C_8$, des atomes d'halogènes, des radicaux COOH, $COOR_6$ ($R_6$ représente un radical alkyle en $C_1$-$C_4$ ou phényle), $CONH_2$, $SO_3H$ ou $SO_2$ $NH_2$ à la solution de poly(éther de phénylène) organique.

2. Procédé suivant la revendication 1, caractérisé en ce que l'on utilise les composés des structures générales A ou B en proportion de 0,1 à 100 mmoles, par rapport à 1 mole de phénol monomère mis en oeuvre.

3. Procédé suivant les revendications 1 et 2, caractérisé en ce que l'on utilise les composés des structures génèrales A ou B sous la forme de solutions organiques.

4. Procédé suivant les revendications 1 à 3, caractérisé en ce qu'à titre de composé A, on utilise l'éther monométhylique de l'hydroquinone ou l'éther monophénylique de l'hydroquinone.

5. Procédé suivant les revendications 1 à 3, caractérisé en ce qu'à titre de composé B, on utilise l'éther monométhylique de la pyrocatéchine ou l'éther monophénylique de la pyrocatéchine.